**Europäisches Patentamt**

**European Patent Office**

**Office européen des brevets**

(19)

(11) Veröffentlichungsnummer: **0 119 593**
**A1**

# (12) EUROPÄISCHE PATENTANMELDUNG

(21) Anmeldenummer: **84102800.4**

(22) Anmeldetag: **14.03.84**

(51) Int. Cl.³: **H 04 N 5/08**

(30) Priorität: **18.03.83 DE 3309809**

(43) Veröffentlichungstag der Anmeldung: **26.09.84**
**Patentblatt 84/39**

(84) Benannte Vertragsstaaten: **DE FR GB IT SE**

(71) Anmelder: **Siemens Aktiengesellschaft, Berlin und München Wittelsbacherplatz 2, D-8000 München 2 (DE)**

(72) Erfinder: **Höck, Günter, Dipl.-Ing., Balanstrasse 69, D-8000 München 90 (DE)**
Erfinder: **Lüder, Rainer, Dr. Dipl.-Ing., Kohlstattstrasse 10, D-8024 Oberhaching (DE)**

(54) Verfahren zum Abtrennen des Synchronimpulsgemisches von FBAS-Signal und Schaltungsanordnung für ein digitales Amplitudensieb zur Durchführung des Verfahrens.

(57) Ein digitales Amplitudensieb für einen Farbfernsehempfänger trennt das Synchronimpulsgemisch vom FBAS-Signal. Es dient zur Synchronisierung des Horizontal- und des Vertikaloszillators und besteht aus einem Analogteil A einer Logikschaltung (L) und einem Stellglied (St). Das Analogteil (A) besitzt mindestens zwei Komparatoren ($K_1 \ldots K_n$) mit unterschiedlichen Schaltschwellen ($U_{S1} \ldots U_{Sn}$). Das Ausgangssignal eines Komparators ist direkt das vom FBAS-Signal abgetrennte Synchronimpulsgemisch und dient zur Synchronisation des Horizontal- bzw. Vertikal-Oszillators. Die Logikschaltung (L) bewirkt über das Stellglied (St) die Verschiebung des Gleichspannungsanteils des FBAS-Signals bis die Abschneideschwelle eines Komparators ($K_1 \ldots K_n$) im Synchronimpulspegelbereich liegt.

SIEMENS AKTIENGESELLSCHAFT            Unser Zeichen
Berlin und München                   VPA 83 P 1169 E


Verfahren zum Abtrennen des Synchronimpulsgemisches vom
FBAS-Signal und Schaltungsanordnung für ein digitales
Amplitudensieb zur Durchführung des Verfahrens


Die Erfindung betrifft ein Verfahren zum Abtrennen des
Synchronimpulsgemisches vom FBAS-Signal für die Synchronisierung des Horizontal- und des Vertikaloszillators
eines Farbfernsehempfängers und eine Schaltungsanordnung
für ein digitales Amplitudensieb zur Durchführung des
Verfahrens.

In Fernsehgeräten dienen zur Synchronisierung des
Horizontal- bzw. Vertikaloszillators die Horizontal-
bzw. Vertikalsynchronimpulse. Diese müssen aus dem
Synchronimpulsgemisch gewonnen werden, das Bestandteil
des FBAS- Signals ist. Daher ist es erforderlich, das
Synchronimpulsgemisch vom FBAS-Signal zu trennen. Dies
wird im allgemeinen durch eine Amplitudenselektion
derjenigen Spannungswerte des FBAS-Signals erreicht, die
eine im Synchronpegelbereich liegende Abschneideschwelle
überschreiten. Die Güte der Synchronisierschaltung hängt
somit im wesentlichen von den Eigenschaften des Amplitudensiebes ab.

Die Abschneideschwelle ist so zu wählen, daß sie sich
innerhalb des Synchronpegelbereichs befindet. Bei idealen
Signalverhältnissen (rauschfrei gedachtes FBAS-Signal)
kann somit eindeutig das Synchronimpulsgemisch vom Videosignal getrennt werden. Bei verrauschtem FBAS-Signal
soll die Abschneideschwelle weder zu nahe am Schwarzpegel, noch zu nahe am Synchronimpulsdachpegel liegen.
Im ersten Fall würden sonst dem Video-Signalbereich überlagerte Rauschspitzen erfaßt werden, und die Synchroni-

Sac 1 Gae / 17.03.1983

0119593

VPA 83 P 1169 E

sation wäre vom Bildinhalt abhängig, während im zweiten Fall die zeitliche Lage der Synchronimpulse durch Rauschspannungseinbrüche zu stark variieren würde.

Aus den angeführten Gründen soll die Impulsabtrennschaltung deshalb folgenden Anforderungen genügen:

Abtrennung des Synchronimpulsgemisches eines positiven FBAS-Signals (Synchronimpulse sind negativ gerichtet), das mit einem Koppelkondensator dem Amplitudensieb zugeführt wird;

Abtrennung des Synchronimpulsgemisches eines FBAS-Signals auch bei stark verrauschtem FBAS-Signal;

Reduktion der fehlerhaften Beeinflussung der Horizontal- und Vertikal-Synchronisation durch Auftreten von Störspannungen, die dem FBAS-Signal überlagert sind;

schnelles Ändern des FBAS-Gleichanteils hinter dem Koppelkondensator für Betriebsfälle in denen die Abschneideschwelle außerhalb des Synchronpegelbereichs liegt, derart, daß eine schnelle Verschiebung des Synchronpegelbereichs zur Abschneideschwelle erfolgt;

Gewinnung der Vertikalimpulse;

MOS-technologiefreundlich und damit weitgehend digitale Signalverarbeitung;

Verwendung nur eines Anschlußstiftes der integrierten Schaltung.

Bisher wird zur Trennung des Synchronimpulsgemisches vom FBAS-Signal bei kapazitiver Kopplung das Verfahren der Spitzenwert-Tastung am Eingang des Amplitudensiebes verwendet. Zur Verbesserung der Synchronisierungseigenschaften bei Störimpulsen wird der Eingangs-Taststrom der Synchronimpuls-Abtrennstufe sowie das Ausgangssignal des Amplitudensiebes gesperrt. Andere Impulsabtrennstufen trennen das Synchronimpulsgemisch vom FBAS-Signal mit einem Komparator, dessen Schaltschwelle durch Bestimmung des Schwarzwert-Pegels und Synchron-Impulsdach-Pegels ermittelt wird. Eine Störimpulsunterdrückung wird dabei mit einer Schaltung vorgenommen, die in der Literatur als "noise inverter" bekannt ist. Die Abtrennung der Vertikal-Synchronimpulse wird durch Integration bzw. Tiefpaßfilterung des Synchronimpulsgemisches mit Konstantstrom gespeister Kapazitäten bzw. RC-Tiefpässe erzielt. Die angeführten Methoden der Synchronimpuls-Abtrennung sind in Bipolar-Technologie integrierbar. Dies ist allerdings mit Schwierigkeiten verbunden, da die genannten Verfahren Kapazitäten erfordern. Insbesondere bei der zweitgenannten Methode zur Speicherung des Schwarzwertpegels und Synchronimpulsdachpegels ist dies der Fall, weil die Kapazitäten bei der Integration große Flächen beanspruchen bzw. bei externer Anbringung zusätzliche Anschlußstifte erfordern.

Bei einem digitalen Fernsehkonzept wird das 7bit quantisierte FBAS-Signal nach digitaler Tiefpaßfilterung einer Impulsabtrennstufe zugeführt, deren Abtrennpegel bei 50 % der Synchronimpulsamplitude festgelegt wird und durch Mittelung des Schwarzwert- und Synchronimpulsdach-Pegels ermittelt wird. Nachteilig ist hierbei der große Schaltungsaufwand zur Realisierung des A/D-Wandlers, der wegen der geforderten hohen Umsetzzeit ein Parallel-Wandler sein muß, sowie die damit verbundenen hohen Anforderungen an den Integrationsprozeß, wenn in einer Standard-MOS-Technologie gefertigt werden soll.

Aufgabe der Erfindung ist es, ein Verfahren zur Abtrennung des Synchronimpulsgemisches und eine Schaltungsanordnung für ein digitales Amplitudensieb zur Durchführung des Verfahrens anzugeben, welche die beschriebenen Schwierigkeiten umgehen, und die die weiter oben angeführten Anforderungen erfüllt.

Diese Aufgabe wird bei einem Verfahren der eingangs genannten Art erfindungsgemäß dadurch gelöst, daß das FBAS einem Analogteil mit n-Komparatoren (n $\geqslant$ 2) mit zu-einander unterschiedlichen Schaltschwellen zugeführt wird, daß die Ausgangssignale der Komparatoren in einer Logikschaltung abgetrennt, aufbereitet, analysiert und bewertet werden, daß die Logikschaltung Steuerinformationen für ein Stellglied liefert und daß das Stellglied den Gleichanteil des FBAS-Signals am Eingang der Komparatoren solange verschiebt, bis die Schaltschwelle eines Komparators im Synchronimpulspegelbereich liegt.

Vorteilhafte Ausgestaltungen des Amplitudensiebes sind in den Unteransprüchen angeführt.

Die Vorteile des Gegenstandes der Erfindung werden anhand der folgenden Ausführungsbeispiele näher erläutert. In der dazugehörenden Zeichnung zeigen
Fig. 1 ein Blockschaltbild,
Fig. 2 ein weiteres Blockschaltbild,
Fig. 3 die Vergleichsspannung der Komparatoren,
Fig. 4 die Lage des Synchronimpulses bezüglich der
        Komparator-Schaltschwellen,
Fig. 5 ein Prinzipschaltbild der Logikschaltung,
Fig. 6 ein Impulsdiagramm,
Fig. 7 ein Prinzipschaltbild eines V-Integrators.

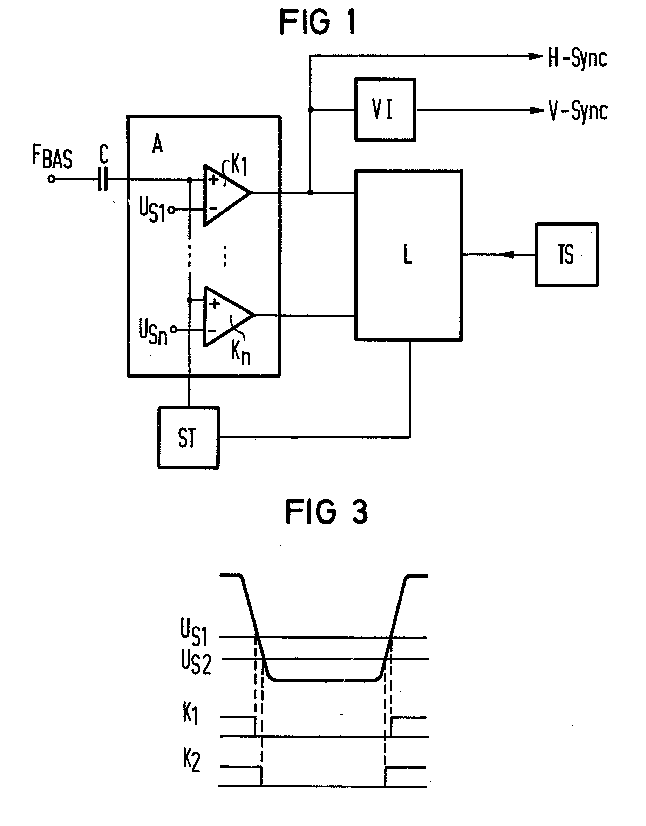

Fig. 1 zeigt ein Blockschaltbild einer Impulsabtrennstufe, bei der das FBAS-Signal über den Koppelkondensator C einem Analogteil A zugeführt wird. Das Analogteil A besteht aus Komparatoren $K_1....K_n$ (n $\geqq$ 2) mit zueinander unterschiedlichen Schaltschwellen $U_{S1}.....U_{Sn}$. Das FBAS-Signal wird zum Beispiel an die nicht invertierenden Eingänge der Komparatoren $K_1....K_n$ gelegt, während den invertierenden Eingängen unterschiedliche Vergleichsspannungen $U_{S1}...U_{Sn}$ zugeführt werden. Diese hier dargestellte Beschaltung der Komaparatoren am Eingang ist nicht zwingend, sondern hängt von der Polarität des FBAS-Signals am Amplitudensieb-Eingang und von der Weiterverarbeitung der Analogteil-Ausgangssignale durch die Logikschaltung L ab. Möglich wäre z.B. auch bei i (i $<$ n) Komparatoren das FBAS-Signal an die nicht invertierenden Eingänge und an die invertierenden Eingänge die Vergleichsspannungen $U_{S1}...U_{Si}$ und an die restlichen n-i Komparatoren des FBAS-Signal an die invertierenden Eingänge und die Vergleichsspannungen $U_{Si+1}....U_{Sn}$ , an die nicht invertierenden Eingänge zu legen. Das Ausgangssignal des Komparators K 1 ist direkt das vom FBAS-Signal abgetrennte Synchronimpulsgemisch und dient zur Synchronisation des Horizontal- bzw. Vertikal-Oszillators. Die Ausgänge der Komparatoren $K_1....K_n$ werden der Logikschaltung L zugeführt. Diese erfüllt folgende Aufgaben:

- Abtastung der Ausgangssignale der Komparatoren $K_1...K_n$ zur Synchronisation auf das Taktsystem TS;

- Signalaufbereitung der abgetasteten Ausgangssignale der Komparatoren. Dabei werden höherfrequente Rauschanteile und impulsförmige Störungen aus dem FBAS- Signal unterdrückt;

- Analyse der aufbereiteten Signale bezüglich ihrer Zeitdauer, Wertigkeit und Symmetrie;

- Berwertung der analysierten Signale,

- Verknüpfung der Bewertungsergebnisse zu Steuersignalen die zur Steuerung des Stellgliedes St verwendet werden.

Das Stellglied St verändert nun entsprechend den von der Logikschaltung L erzeugten Steuersignalen den Gleichanteil des FBAS-Signals an den mit dem Koppelkondensator C verbundenen Komparatoreingängen. Diese Verschiebung des FBAS-Signal-Gleichanteils erfolgt so lange, bis die Lage des Synchronimpulsgemisches gegenüber der Abschneide- schwelle des Komparators $K_1$ von der Logikschaltung L als optimal erkannt wird. Im Taktsystem TS werden Taktsignale zur Steuerung des zeitlichen Ablaufs der Vorgänge in der Logikschaltung gewonnen. Das Taktsystem TS braucht dabei nicht synchron zur Horizontalfrequenz des am Amplitudensieb-Eingang anliegenden FBAS-Signals zu sein.

Die Gewinnung des Vertikal-Synchronimpulses V-Sync erfolgt durch Integration des abgetrennten Synchronimpulsgemisches in einer Zählschaltung VI.

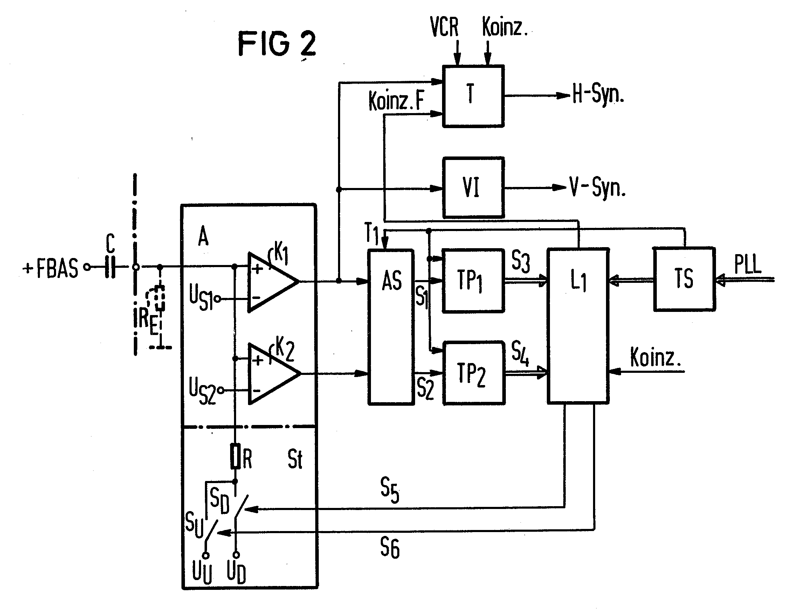

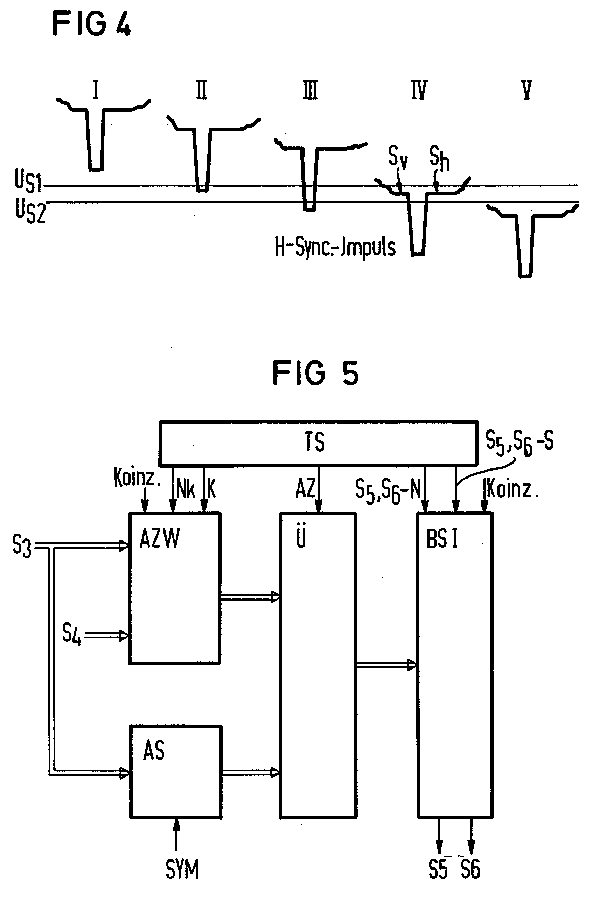

In der Fig. 2 ist das Blockschaltbild eines weiteren digitalen Amplitudensiebes dargestellt, bei dem das Analogteil A aus zwei Komparatoren $K_1$ und $K_2$ und einem Stellglied St besteht. Die Vergleichsspannungen $U_{S1}$ bzw. $U_{S2}$ der Komparatoren $K_1$ bzw. $K_2$ unterscheiden sich voneinander, so daß das FBAS-Eingangssignal mit drei Stufen quantisiert am Analogteil-Ausgang vorliegt. In der Fig. 3 ist dieses Verhalten dargestellt, wobei oben in der Fig. die Vergleichsspannungen $U_{S1}$ und $U_{S2}$ und unten das Aus- gangssignal des Komparators $K_1$ bzw. $K_2$ eingezeichnet sind.

Beide Ausgangssignale werden der Abtastschaltung AS zugeführt und von dieser mit dem Takt $T_1$ abgetastet und damit auf das Taktsystem TS synchronisiert. Die Weiterverarbeitung der abgetasteten Komparatorausgangssignale von

$K_1$ bzw. $K_2$ erfolgt in digitalen Tiefpaßfiltern $TP_1$ bzw. $TP_2$, die ebenfalls mit dem Takt $T_1$ getaktet werden. Diese Tiefpaßfilterung dient zur Signalaufbereitung der abgetasteten Komparatorausgangssignale. Das FBAS-Signal am Eingang des Amplitudensiebes ist im allgemeinen mit Rauschen und impulsförmigen Störspannungen überlagert. Diese unerwünschten Störanteile erscheinen nun ebenfalls an den Komparatorausgängen, sofern sie die Abschneideschwelle $U_{S1}$ bzw. $U_{S2}$ der Komparatoren überschreiten. Mit den Tiefpaßfiltern $TP_1$ bzw. $TP_2$ werden die in den abgetasteten Komparatorausgangssignalen enthaltenen höherfrequenten Störspannungsspitzen unterdrückt. Die in der Logikschaltung $L_1$ erfolgende Analyse und Bewertung des tiefpaßgefilterten Signals kann somit auf die in der Norm festgelegten Eigenschaften des FBAS-Signals beschränkt bleiben, ohne daß eine fehlerhafte Beeinflussung des Analyseergebnisses aufgrund von kurzzeitigen Störspannungsspitzen eintritt. Ferner ergeben sich aus den Eingangssignalen $S_1$ bzw. $S_2$ in Abhängigkeit der Struktur der digitalen Tiefpaßfilter mehrwertige Ausgangssignale, die z.B. wie hier die Signale $S_3$ bzw. $S_4$ vorteilhaft zur Analyse herangezogen werden können. Die tiefpaßgefilterten Signale $S_1$ bzw. $S_2$ werden als mehrwertige Signale $S_3$ bzw. $S_4$ der Schaltungslogik $L_1$ zur Analyse, Bewertung und Erzeugung von Steuersignalen für das Stellglied St zugeleitet. Hinter dem Koppelkondensator C kann die Lage des FBAS-Signals gegenüber $U_{S1}$ bzw. $U_{S2}$ 5 Fälle annehmen, die in Fig. 4 schematisch dargestellt sind ($S_v$ vordere und $S_h$ hintere Schwarzschulter). Entsprechend den 5 möglichen Fällen I bis V unterscheiden sich die Ausgangssignale von $K_1$ und $K_2$ im logischen Pegel und in der Zeitdauer voneinander (vgl. auch Fig. 3).

Bei verrauschtem FBAS-Signal kann die Symmetrie der vorderen und hinteren H-Sync.-Impuls-Flanke der tiefpaßge-

filterten Signale $S_1$ bzw. $S_2$ als Kriterium zur Einstellung der optimalen Lage des FBAS-Signals bezüglich der Schaltschwellen $U_{S1}$ bzw. $U_{S2}$ herangezogen werden. Ein anderes Symmetriekriterium zur Optimierung des Abschneidepegels bei verrauschtem FBAS-Signal ist z.B. die Gleichverteilung der Rauschspannungsspitzen während des H-Sync.-Impulsdaches und der hinteren Schwarzschulter $S_h$. Die Analyse wird im zeilenfrequenten Rhytmus vorgenommen und ermittelt die vorher genannten Kriterien Zeitdauer, Wertigkeit und Symmetrie der Signale $S_3$ und $S_4$. Die Bewertung der Analyseergebnisse erfolgt durch einen Vergleich mit vorgegebenen Sollwerten. Diese können zu einer Tabelle abgelegt sein oder fest verdrahtet als Schaltwerk bzw. Schaltnetz realisiert werden. Die Bewertungsergebnisse werden zu Steuersignalen $S_5$ bzw. $S_6$ verknüpft, welche das Stellglied St steuern. Die Impulsdauern der Signale $S_5$ bzw. $S_6$ können dabei in Abhängigkeit der Bewertungsergebnisse variabel sein. Bei der Analyse und Bewertung der Signale $S_3$ bzw. $S_4$ durch die Schaltungslogik $L_1$ kann man zwei Fälle unterscheiden: Die Horizontaloszillatorfrequenz ist mit der Horinzontalfrequenz des Senders in

     (i)   Nicht-Koinzidenz

   (ii)   Koinzidenz.

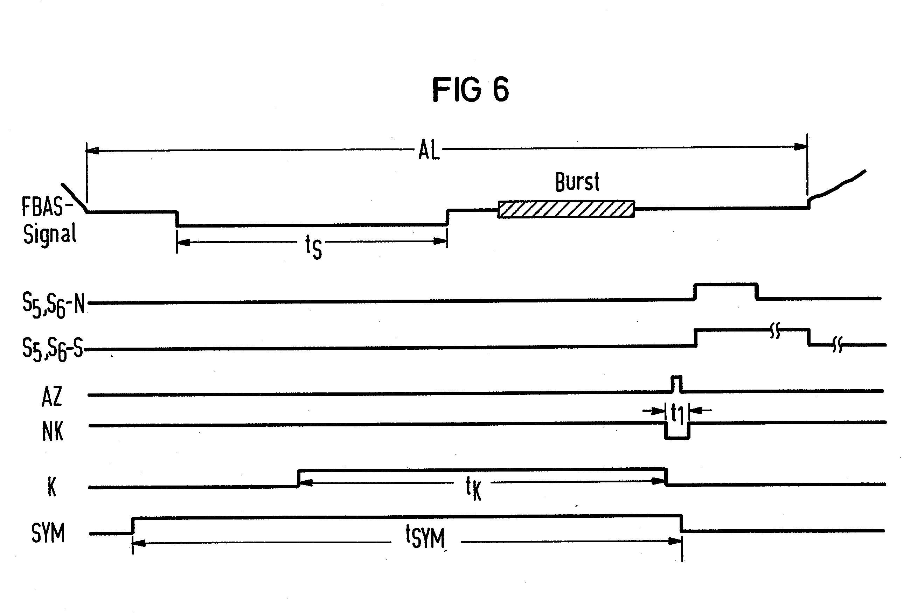

Diese zwei Fälle werden durch das Signal Koinz. angezeigt, das in einem hier nicht beschriebenen Koinzidenzdetektor erzeugt wird. Im Fall der Nicht-Koinzidenz herrscht Asynchronität zwischen der Horizontaloszillatorfrequenz und Horizontalfrequenz des Senders. Hierbei ist es notwendig, die Analyse der Signale $S_3$ und $S_4$ während eines Zeitintervalls $t_{NK} = t_H - t_1$ vorzunehmen, das möglichst die Dauer einer Zeilenperiode $t_H$ hat. Im Fall der Koinzidenz ist

0119593

die Horizontaloszillatorfrequenz synchron zur Horizontalfrequenz des Senders. Weil hiermit die zeitliche Lage der H-Synchronimpulse bekannt ist, kann das Meßintervall in dem die Analyse durchgeführt wird, auf ein Zeitintervall $t_K$ innerhalb der H-Austastlücke beschränkt werden. Damit wird eine Unabhängigkeit der Analyseergebnisse vom Bildinhalt insbesondere bei verrauschtem FBAS-Signal erreicht. Eine mögliche Lage und Dauer der Zeitintervalle $t_K$ bzw. $t_1$ ist in Fig. 6 dargestellt (AL Austastlücke).

Das Stellglied St besteht aus den zwei Schaltern $S_D$ und $S_U$, dem Widerstand R und den Gleichspannungsquellen $U_D$ und $U_U$. Mit R, $U_D$ und $U_U$ läßt sich der Strom in den Kondensator C einstellen, während einer der Schalter $S_U$ bzw. $S_D$ geschlossen ist.

Die Schalter $S_D$ bzw. $S_U$ (z.B. Transistoren) werden von den Steuersignalen $S_5$ bzw. $S_6$ gesteuert. Der Gleichspannungsanteil des FBAS-Signals an den nicht invertierenden Komparator-Eingängen wird nun durch das Stellglied gemäß der Steuersignale $S_5$ bzw. $S_6$ so verschoben, bis die Abschneideschwelle eines Komparators (in der Fig. 2 $K_1$) im Synchronimpulspegelbereich liegt und von der Logikschaltung $L_1$ als optimal erkannt wird. Dieses Ausgangssignal stellt das abgetrennte Synchronimpulsgemisch dar, das zur Störimpulsbefreiung an eine Torschaltung T geleitet wird und danach zur Synchronisierung des Horizontal-Oszillators dient. Die Torschaltung T arbeitet so, daß im Koinzidenzfall ein Koinzidenzfenster KoinzF, das von der Taktsignalerzeugung an die Tonschaltung T gelegt wird, während der Zeit des Bildinhaltes den Ausgang der Torschaltung T sperrt und somit Störsignale während der Zeit des Bildinhaltes unterdrückt. Bei VCR-Betrieb wird das Koinzidenzfenster mit VCR abgeschaltet, weil hier Phasensprünge der Synchronimpulse auftreten können.

Weitere Störbefreiungen der Impulsabtrennung werden erreicht durch:

- den hochohmigen Eingangswiderstand $R_E$ des Amplitudensiebes. Wegen der großen Zeitkonstante $C \cdot R_E$ wird eine starke Änderung des FBAS-Gleichanteils am nicht invertierenden Eingang von $K_1$ bzw. $K_2$ durch Impulsstörungen vermieden.

- die Tiefpaßfilter $TP_1$ und $TP_2$. Sie unterdrücken den Einfluß von Impulsstörungen auf die Regelung des Gleichanteils des FBAS-Signals an den Komparator-Eingängen. Störungen längerer Dauer können nur einmal pro Zeilenperiode eine falsche Tastung über das Stellglied verursachen (bei Koinzidenz müßten diese während der Zeitintervalle $t_K$ bzw. $t_{SYM}$ (vgl. Fig. 6) auftreten).

- einen Schnellgang. Dadurch wird der Regelvorgang beschleunigt, falls Störimpulse den Gleichpegel am Amplitudensieb-Eingang soweit verschoben haben, daß, wie im folgenden erläutert wird, durch die Bewertungsergebnisse des Soll/Ist-Vergleichs das Signal $S_{5,6}$ - S auf den Ausgang des Blocks BSI in Fig. 5 durchgeschaltet wird.

In der Fig. 5 ist ein Prinzipschaltbild der Logikschaltung L dargestellt, worin die Signale $S_3$ und $S_4$ in den Funktionsblock AZW und in den Funktionsblock AS nur das Signal $S_3$ eingespeist werden.

Außerdem werden dem Block AZW die Signale Koinz., NK und K und dem Block S das Signal SYM zugeführt. Die Signale NK, K und SYM sind in Fig. 6 dargestellt. Im Funktionsblock AZW wird die Analyse der Zeit- und Wertigkeitsbedingungen, im Funktionsblock AS die der Symmetriebedingungen vorgenommen. Die Analyse im Block AZW erfolgt bei Koinzidenz, wie schon vorher erwähnt, während der Zeit $t_K$ mit dem Signal K, bei Nichtkoinzidenz während der Zeit $t_{NK} = t_H - t_1$ mit dem Signal NK. Dies ist, wie aus Fig. 6 hervorgeht, beim Signal K während eines Teils des Synchronimpulsdaches und der daraus anschließenden hinteren Schwarzschulter der Fall. Bei Nichtkoinzidenz ist die genaue zeitliche Lage des Signals NK bezüglich des FBAS-Signals am Amplitudensieb-Eingang unbekannt. Jedoch werden $(100 . t_1)/t_H$ % der Signale $S_3$ bzw. $S_4$ mit der Analyse erfaßt, also auf jeden Fall Teile der hinteren Schwarzschulter und des Synchron-impulsdaches, sofern $t_1 < t_S$ bleibt, wobei $t_S$ die Dauer des Synchronimpulses bedeutet. Die Analyse im Block AS erfolgt wie in Fig. 6 dargestellt innerhalb der Impulsdauer des Signals SYM. Zum Zeitpunkt der Vorderflanke des Signals AZ werden sämtliche Analyseergebnisse in einem Register Ü zwischengespeichert. Die Zustandsvariablen der Blöcke AZW bzw. AS werden unmittelbar darauf rückgesetzt und somit für die Analyse der nächsten Zeile initialisiert.

Im Funktionsblock BSI erfolgt der Soll/Ist-Vergleich der Analyseergebnisse mit Sollwerten. Durch eine Bewertung dieser Vergleichsergebnisse wird entschieden, welches der Signale $S_5$, $S_6$ - N bzw. $S_5$, $S_6$ - S als Steuersignal $S_5$ auf den Ausgang durchgschaltet werden soll. Das Signal $S_5$, $S_6$ - S kann dabei wie in Fig. 6 angedeutet in Abhängigkeit der Bewertung der oben genannten Vergleichsergebnisse variable Impulsdauer besitzen.

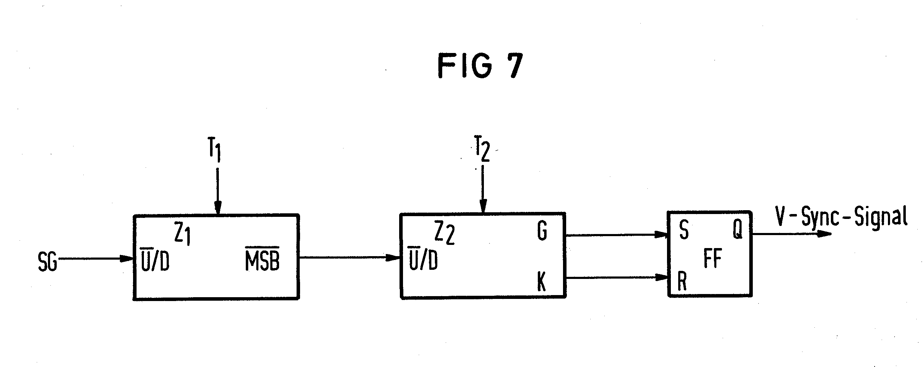

In Fig. 7 ist ein Prinzipschaltbild des Vertikal-Integrators VI dargestellt. Er besteht aus 2 UP/DOWN-Zählern mit Mini-mum/Maximum-Begrenzung $Z_1$ und $Z_2$, sowie einem SR-Flip Flop FF. Die Zähler $Z_1$ bzw. $Z_2$ werden mit den Taktsignalen $T_1$ bzw. $T_2$ getaktet. Am Eingang $\overline{U}/D$ von $Z_1$ liegt das Syn-chronimpulsgemisch SG, das direkt vom Ausgang des Kompara-

tors $K_1$ in Fig. 2 abgenommen wird und die Zählrichtung festlegt. Als Ausgang von $\underline{Z_1}$ wird dessen MSB benutzt, dessen invertierter Wert $\overline{\text{MSB}}$ als Steuersignal für $Z_2$ dient. Durch diese Hintereinanderschaltung der zwei Zähler wird eine Verbesserung der Vertikal-Synchronimpuls-Erkennung bei verrauschtem FBAS-Signal , gegenüber der Verwendung nur eines Zählers bewirkt. Überschreitet der Zähler $Z_2$ den Wert G, wird das SR-Flip Flop FF gesetzt und an dessen Ausgang Q der Vertikal-Synchronimpuls begonnen. Unterschreitet der Zähler $Z_2$ den Wert K (K < G), wird das SR-Flip Flop zurückgesetzt, womit an dessen Ausgang Q der V-Impuls beendet wird.

15 Patentansprüche
7 Figuren

Patentansprüche

1. Verfahren zum Abtrennen des Synchronimpulsgemisches vom FBAS-Signal für die Synchronisierung des Horizontal- und Vertikaloszillators eines Farbfernsehempfängers, d a - d u r c h   g e k e n n z e i c h n e t, daß das FBAS-Signal einem Analogteil (A) mit n Komparatoren (K$_1$....K$_n$; n   2) mit zueinander unterschiedlichen Schaltschwellen (U$_{S1}$...U$_{Sn}$) zugeführt wird, daß die Ausgangssignale der Komparatoren (K$_1$...K$_n$) in einer Logikschaltung (L) abgetastet, aufbereitet, analysiert und bewertet werden, daß die Logikschaltung (L) Steuerinformationen für ein Stellglied (St) liefert, und daß das Stellglied (St) den Gleichanteil des FBAS-Signals am Eingang der Komparatoren (K$_1$...K$_n$) solange verschiebt, bis die Schaltschwelle eines Komparators (K$_1$...K$_n$) im Synchronimpulspegelbereich liegt.

2. Verfahren nach Anspruch 1, d a d u r c h   g e - k e n n z e i c h n e t, daß die Ausgangssignale der Komparatoren (K$_1$....K$_n$) Tiefpaßfiltern zugeleitet werden und daß die Tiefpaßfilter mehrwertige Ausgangssignale liefern, die der Logikschaltung (L) zugeführt werden.

3. Verfahren nach Anspruch 1 oder 2, d a d u r c h g e k e n n z e i c h n e t, daß die Symmetrie der vorderen und hinteren H-Synchron-Impuls-Flanke der tiefpaßgelieferten Komparatorausgangssignale zur Einstellung der Lage des FBAS-Signals bezüglich der Schaltschwellen (U$_{S1}$...U$_{Sn}$) der Komparatoren (K$_1$....K$_n$) verwendet wird.

4. Verfahren nach Anspruch 1 oder 2, d a d u r c h g e k e n n z e i c h n e t, daß die Gleichverteilung der Rauschspannungsspitzen während des H-Synchron-Impulsdaches und der hinteren Schwarzschulter zur Einstellung der Lage

0119593

des FBAS-Signals bezüglich der Schaltschwellen ($U_{S1} \ldots U_{Sn}$) der Komparatoren ($K_1 \ldots K_n$) verwendet wird.

5. Verfahren nach einem der Ansprüche 1 bis 4, d a - d u r c h   g e k e n n z e i c h n e t , daß bei Nicht-Koinzidenz zwischen Horizontaloszillatorfrequenz des Empfängers mit der Horizontalfrequenz des Senders das Meßintervall zur Analyse der tiefpaßgefilterten Ausgangssignale den größten Teil einer Zeilenperiode beträgt.

6. Verfahren nach einem der Ansprüche 1 bis 4, d a - d u r c h   g e k e n n z e i c h n e τ , daß bei Koinzi-denz zwischen Horizontaloszillatorfrequenz des Empfängers und Horizontalfrequenz des Senders das Meßintervall zur Analyse der tiefpaßgefilterten Ausgangssignale der Komparatoren auf ein Zeitintervall innerhalb der H-Austastlücke beschränkt wird.

7. Verfahren nach einem der Ansprüche 1 bis 6, d a - d u r c h   g e k e n n z e i c h n e t , daß zur Stör-signalbefreiung des abgetrennten Synchronimpulsgemisches eine Torschaltung verwendet wird, die im Koinzidenzfall bei Nicht-VCR-Betrieb mittels eines Koinzidenzfensters Störsignale während der Bildinhaltsdauer unterdrückt.

8. Verfahren nach einem der Ansprüche 1 bis 7, d a - d u r c h   g e k e n n z e i c h n e t , daß der Regel-vorgang in einem Schnellgang beschleunigt erfolgt, wenn der Gleichpegel am Amplitudensieb-Eingang durch Störimpulse über eine festgelegte Größe verschoben wird.

9. Verfahren nach einem der Ansprüche 1 bis 8, d a - d u r c h   g e k e n n z e i c h n e t , daß zur Steuerung des Regelvorganges ein Signal ($S_5$, $S_6$ - S) mit variabler Impulsdauer verwendet wird.

0119593

10. Verfahren nach einem der Ansprüche 1 bis 9, d a -
d u r c h   g e k e n n z e i c h n e t, daß zur Stör-
befreiung der Synchronimpulsabtrennung ein hochohmiger
Eingangswiderstand $R_E$ verwendet wird.

11. Verfahren nach einem der Ansprüche 1 bis 10, d a -
d u r c h   g e k e n n z e i c h n e t, daß der Taststrom in den Koppelkondensator C durch einen Widerstand
(R) und zwei Vergleichsspannungen ($U_U$, $U_D$) eingestellt
wird.

12. Schaltungsanordnung für ein digitales Amplitudensieb
zur Durchführung des Verfahrens nach einem der Ansprüche
1 bis 11, g e k e n n z e i c h n e t   durch
a) einen Analogteil (A) mit zumindest zwei Komparatoren
   ($K_1...K_n$) mit zueinander unterschiedlichen Schaltschwellen ($U_{S1}...U_{Sn}$);
b) eine Logikschaltung (L) in der die Ausgangssignale der
   Komparatoren ($K_1...K_n$) abgetastet, aufbereitet, analysiert, bewertet und in Steuerinformationen für ein
   Stellglied (St) umgesetzt werden;
c) einem Stellglied (St), das gemäß einer Steuerinformation der Logikschaltung (L) den Gleichanteil des FBAS-
   Signals am Eingang der Komparatoren des Analogteils (A)
   so lange verschiebt, bis die Schaltschwelle eines
   Komparators ($K_1 ...K_n$) im Synchronimpulspegelbereich
   liegt.
d) einen digitalen Integrator (VI) zur Gewinnung der Vertikal-Sychronimpulse.

13. Schaltungsanordnung nach Anspruch 12, d a d u r c h
g e k e n n z e i c h n e t, daß die Logikschaltung (L)
aus einer Abtastschaltung (AS), digitalen Tiefpässen

(TP$_1$, TP$_2$), Analyseschaltungen (A ZW, AS), einem Übernahmeregister (Ü) und einer Schaltung (BSI) zur Auswertung der Analyseergebnisse und zur Steuerinformationserzeugung besteht.

14. Schaltungsanordnung nach Anspruch 12 oder 13, d a -
d u r c h   g e k e n n z e i c h n e t, daß das Stellglied (St) aus steuerbaren elektronischen Schaltern
(S$_U$, S$_D$), einem Widerstand (R) und zwei Spannungsquellen
(U$_U$, U$_D$) besteht.

15. Schaltungsanordnung nach einem der Ansprüche 12 bis
14, d a d u r c h   g e k e n n z e i c h n e t, daß
der digitale Integrator (VI) aus einem ersten UP/DOWN-
Zähler mit Min/Max-Begrenzung (Z$_1$), einem vom Ausgangssignal des Zählers (Z$_1$) angesteuerten zweiten UP/DOWN-
Zähler mit Min/Max-Begrenzung (Z$_2$) und einem von den Ausgangssignalen des Zählers (Z$_2$) angesteuerten SR-Flip-
Flop (FF) besteht.

## FIG 1

## FIG 3

FIG 2

## FIG 4

I  II  III  IV  V

$S_v$  $S_h$

$U_{S1}$
$U_{S2}$

H-Sync.-Jmpuls

## FIG 5

TS  $S_5, S_6$-S

Koinz.  Nk  K  AZ  $S_5, S_6$-N  Koinz.

$S_3$  AZW  Ü  BS I

$S_4$

AS

SYM

$S_5$  $S_6$

# FIG 6

4/5

0119593

# FIG 7

SG →

| $\overline{U}/D$ | $Z_1$ | $\overline{MSB}$ |

$T_1$ ↓

→

| $\overline{U}/D$ | $Z_2$ | G |
| | | K |

$T_2$ ↓

→

| S | FF | Q |
| R | | |

→ V-Sync-Signal

0119593

**Europäisches Patentamt**

**EUROPÄISCHER RECHERCHENBERICHT**

| | EINSCHLÄGIGE DOKUMENTE | | EP 84102800.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. ³)** |
| A | DE - B2 - 2 736 778 (TEKTRONIK)<br><br>* Fig. 1; Spalte 1, Zeilen 20-24 *<br><br>-- | | H 04 N 5/08 |
| A | DE - B2 - 2 713 952 (RCA)<br><br>* Fig. 1; Spalte 1, Zeilen 3-18; Spalte 2, Zeilen 34-56 *<br><br>-- | | |
| A | DE - A1 - 2 933 471 (RCA)<br><br>* Seite 6, 1. Absatz; Seite 9, 3. Absatz *<br><br>---- | | |

| **RECHERCHIERTE SACHGEBIETE (Int. Cl. ³)** |
|---|
| H 04 N 5/00 |

Der vorliegende Recherchenbericht wurde für alle Patentansprüche erstellt.

| **Recherchenort** | **Abschlußdatum der Recherche** | **Prüfer** |
|---|---|---|
| WIEN | 08-05-1984 | BENISCHKA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82